# EUROPEAN PATENT APPLICATION

(11) **EP 4 266 727 A1**
(43) Date of publication of application: **25.10.2023**
(21) Application number: 22749153.7
(22) Date of filing: 29.01.2022
(51) Int. Cl.: H04W 16/10, H04W 8/22

(54) **CORE NETWORK SYSTEM**

(30) Priority: 03.02.2021 CN 202110150353
(71) Applicant: Vivo Mobile Communication Co., Ltd., Dongguan, Guangdong 523863 (CN)
(72) Inventor: KANG, Yanchao, Dongguan, Guangdong 523863 (CN)
(74) Representative: Murgitroyd & Company
(86) International application number: PCT/CN2022/074925
(87) International publication number: WO 2022/166874

(57) **Abstract**

Embodiments of this application disclose a core network system. The core network system includes: a first network function and a second network function, where the first network function and the second network function are connected through a core network SBA bus, where the first network function is configured to provide an access control-related service; and the second network function is configured to provide a mobility management-related service and/or a network service support service.

## Description

### CROSS-REFERENCE TO RELATED APPLICATION

The present invention claims priority to Chinese Patent Application No. 202110150353.X, filed with the China National Intellectual Property Administration on February 3, 2021 and entitled "CORE NETWORK SYSTEM", which is incorporated herein by reference in its entirety.

### TECHNICAL FIELD

This application belongs to the field of communications technologies, and specifically, relates to a core network system.

### BACKGROUND

A service-based architecture (Service-Based Architecture, SBA) is introduced in a fifth-generation (5th Generation, 5G) communications system. SBA-based design is performed on both a control plane and a management plane of a 5G core network, but a control plane SBA is different from a management plane SBA. Specifically, the control plane SBA still retains a modular design principle of a conventional core network, and the management plane SBA is designed in a more purely SBA-based manner. The control plane SBA is different from the management plane SBA, which is not conducive to integration or interaction between different domains of the core network.

### SUMMARY

Embodiments of this application provide a core network system, to resolve a problem that a control plane SBA of a core network is different from a management plane SBA, which is not conducive to integration or interaction between different domains of the core network.

According to a first aspect, a core network system is provided, including: a first network function and a second network function, where the first network function and the second network function are connected through a core network service-based architecture SBA bus, where the first network function is configured to provide an access control-related service; and the second network function is configured to provide a mobility management-related service and/or a network service support service.

In the core network system provided in the embodiments of this application, the first network function and the second network function are set, to separately set an access control function and other core network functions (such as a mobility management function and a network service support function). In this way, an SBA-based core network can be better integrated with an SBA-based management plane, to lay a foundation for integration of an SBA-based access network and the SBA-based core network.

### BRIEF DESCRIPTION OF THE DRAWINGS

FIG. 1 is a schematic structural diagram of a core network system according to an embodiment of this application;
FIG. 2 is an architectural diagram of an interface form of a core network system according to an embodiment of this application;
FIG. 3 is an architectural diagram of an interface form of a core network system according to an embodiment of this application;
FIG. 4 is a schematic architectural diagram of a core network system according to an embodiment of this application;
FIG. 5 is a schematic diagram of a mobility management process implemented by a core network system according to an embodiment of this application; and
FIG. 6 is a schematic flowchart of a session management process implemented by a core network system according to an embodiment of this application.

### DETAILED DESCRIPTION

The following clearly describes the technical solutions in the embodiments of this application with reference to the accompanying drawings in the embodiments of this application. Apparently, the described embodiments are some but not all of the embodiments of this application. All other embodiments obtained by persons of ordinary skill in the art based on the embodiments of this application shall fall within the protection scope of this application.

The terms "first", "second", and the like in the specification and claims of this application are used to distinguish between similar objects instead of describing a specific order or sequence. It should be understood that the terms used in this way are interchangeable in appropriate circumstances, so that the embodiments of this application can be implemented in ab order other than the order illustrated or described herein. In addition, the objects distinguished by "first" and "second" usually belong to one category, and the number of objects is not limited. For example, there may be one or more first objects. In addition, in the specification and claims, "and/or" represents at least one of connected objects, and the character "/" typically represents an "or" relationship between the associated objects.

The following describes a sixth-generation (6-th Generation, 6G) communications system as an example, and 6G terms are used in most of the following descriptions. However, these technologies may also be applied to applications other than a 6G system application, for example, an evolved 5G system or a 7G system.

An embodiment of this application provides a core network system, including: a first network function and a second network function, where the first network function and the second network function are connected through a core network service-based architecture (Service-Based Architecture, SBA) bus.

The first network function may be configured to provide an access control-related service (or referred to as a function), for example, access, registration, and security services. In most of subsequent embodiments, the first network function is described by using an access control function (Access control function, ACF) as an example.

The second network function may be responsible for a service irrelevant to access control. For example, the second network function is configured to provide a mobility management-related service and/or a network service support service. Specifically, for example, the second network function is configured to provide the mobility management-related service and the network service support service; the second network function is configured to provide the mobility management-related service; or the second network function is configured to provide the network service support service.

A network service (namely, a network sub-function) mentioned in this embodiment is usually an internal service of a core network, and is different from a service provided for a terminal. In most of subsequent embodiments, the second network function is described by using a mobility management and service support function (mobility management and service support function, MSF) as an example.

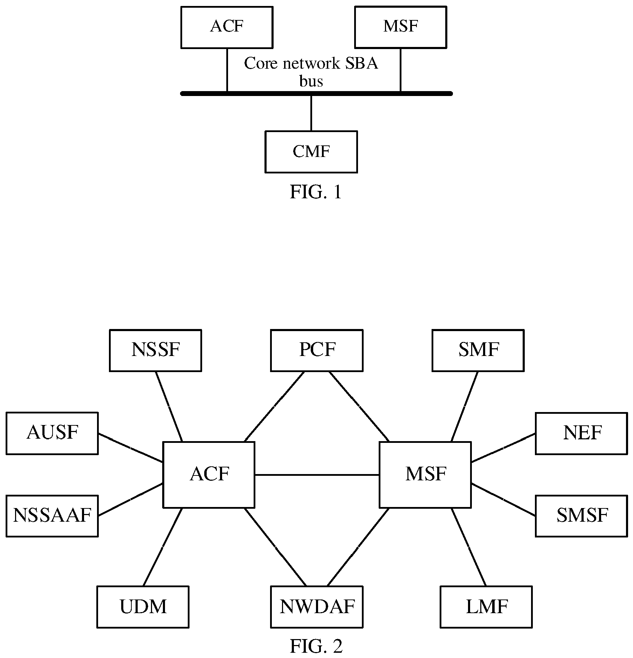

FIG. 1 is a schematic structural diagram of a core network system according to an embodiment of this application. The core network system mainly includes an ACF (corresponding to a first network function) and an MSF (corresponding to a second network function), and the ACF and the MSF are connected through a core network SBA bus.

Actually, the core network system shown in FIG. 1 may further include other network functions, such as a context management function (Context management function, CMF) (corresponding to a third network function in the following embodiments). The CMF is connected to the ACF and the MSF through the core network SBA bus. The CMF is mainly configured to provide a terminal context (UE context) management service.

It should be noted that network functions mentioned in the embodiments of this application, such as the first network function, the second network function, and the third network function, are usually functional entities capable of implementing some functions or providing some services. Therefore, these network functions may alternatively be replaced with other technical terms. For example, the first network function is replaced with a technical term such as the ACF or a first network element, the second network function is replaced with a technical term such as the MSF or a second network element, and the third network function is replaced with a technical term such as the CMF or a third network element.

In the core network system provided in this embodiment of this application, the first network function and the second network function are set, to separately set an access control function and other core network functions (such as a mobility management function and a network service support function). In this way, an SBA-based core network can be better integrated with an SBA-based management plane, to lay a foundation for integration of an SBA-based access network and the SBA-based core network.

The following describes the "an SBA-based core network can be better integrated with an SBA-based management plane". In this embodiment, a control plane SBA of the first network function may retain a modular design principle of a conventional core network (such as a 4G core network). Each network sub-function that can be implemented by the first network function is not a free combination of microservices, but is a set of specific network sub-functions standardized in a protocol. These network sub-functions are network functions related to access control, registration, and authentication and authorization. A management plane SBA of the second network function SBA is designed in a more purely SBA-based manner. The second network function can implement various internal network services (namely, network sub-functions). During network configuration, various internal network services (namely, network sub-functions) can be flexibly combined. In this embodiment of this application, the access control function and other core network functions are separately set, but are not centrally implemented by one network function (for example, all the functions are implemented by an AMF), so that the SBA-based core network can be better integrated with the SBA-based management plane.

Optionally, the access control-related service provided by the first network function in the foregoing embodiments may include at least one of the following (1) to (8).
(1) A second interface (N2) control plane message is received, and the N2 control plane message is locally processed, or first target information in the N2 control plane message is sent to a first target network function. In this example, the first network function serves as a termination of an N2 control plane protocol (Termination of RAN CP interface). The first target network function mentioned in this example may be a network function other than the first network function in the core network system, for example, the second network function.
(2) Second target information is received from a second target network function, and an N2 control plane message including the second target information is sent to an access network device. In this example, the first network function serves as a termination of an N2 control plane protocol (Termination of RAN CP interface (N2)).
(3) An N2 control plane message is sent to the access network device. In this example, the N2 control plane message may be locally generated by the first network function.
(4) A ciphering and integrity protection service of a non-access stratum (Non-Access Stratum, NAS) message. In this example, the first network function serves as a termination of a NAS protocol (Termination of NAS (N1)), and may perform ciphering and integrity protection (ciphering and integrity protection) and the like on a NAS message.
(5) A NAS connection management (Connection management) service. In this embodiment, the termination of the NAS protocol is the first network function, and therefore the NAS connection management service may also be implemented by the first network function.
(6) A registration management (Registration management) service.
(7) A security-related service. Optionally, the security-related service may include at least one of the following: an access authentication (Access Authentication) service; an access authorization (Access Authorization) service; a security anchor functionality (Security Anchor Functionality); and a network slice-specific authentication and authorization (Network Slice-Specific Authentication and Authorization) service.
(8) A non-3rd Generation Partnership Project (non-3GPP) access support service.

Optionally, the mobility management-related service and/or the network service support service provided by the second network function in the foregoing embodiments may include at least one of the following (1) to (9).
(1) A reachability management (Reachability management) service.
(2) A mobility management (Mobility Management) service.
(3) A terminal mobility event notification (UE mobility event notification) service.
(4) A lawful intercept (Lawful intercept) service.
(5) A session management (Session Management) service support service, for example, providing transport for SM messages between a terminal and a session management function (Session Management Function, SMF) (Provide transport for SM messages between UE and SMF), a transparent proxy for routing SM messages (Transparent proxy for routing SM messages), and EPS bearer identifier allocation for interworking with an evolved packet switched system (Evolved Packet Switched System, EPS) (EPS Bearer ID allocation for interworking with EPS).
(6) A short message service (Short Message Service, SMS) support function, for example, providing transport for SMS messages between the terminal and a short message service function (Short Message Service Function, SMSF) (Provide transport for SMS messages between UE and SMSF).
(7) A location service support function, for example, location services management for regulatory services (Location Services management for regulatory services), and providing transport for location services messages between the terminal and a location management function (Location Management Function, LMF) as well as between a radio access network (Radio Access Network, RAN) and the LMF (Provide transport for Location Services messages between UE and LMF as well as between RAN and LMF).
(8) A cellular Internet of things (Cellular Internet Of Things, CIoT) service support function, for example, support for control plane CloT optimization (Support for Control Plane CIoT Optimization), and support for user plane CIoT optimization (Support for User Plane CIoT Optimization).
(9) An external parameter configuration function, for example, provisioning of external parameters such as expected terminal behavior parameters or network configuration parameters (Provisioning of external parameters, Expected UE Behavior parameters or Network Configuration parameters).

As mentioned in the foregoing embodiments, the core network system provided in the embodiments of this application may further include the third network function (namely, the CMF), the third network function is connected to the core network SBA bus, and the third network function is configured to provide the terminal context management service.

In this embodiment, the third network function is additionally introduced for providing the terminal context management service, to better design an SBA architecture, so that some network functions (the ACF, the MSF, and the like) focus on their own logical functions and services.

In this embodiment, other network functions may be registered with the third network function, and then a terminal context may be requested from the third network function, or the third network function may be requested to update the terminal context. For example, the ACF or the MSF requests the terminal context from the third network function, or the ACF or the MSF requests the third network function to update the terminal context.

In this embodiment, the terminal context managed by the third network function mainly includes a context related to access and mobility management, for example, a terminal context of an original access and mobility management function (Access and Mobility Management Function, AMF) in the conventional technology. It can be understood that the terminal context stored and managed by the third network function may further include terminal contexts generated and used by other network functions, for example, terminal contexts generated and stored by network functions such as a session management function (Session Management Function, SMF) or an access network device (for example, a base station).

Optionally, the first network function mentioned in the foregoing embodiments may be further configured to receive an uplink NAS message, and locally process the uplink NAS message, or send third target information in the uplink NAS message to a third target network function. For example, the first network function sends necessary information in a decrypted uplink NAS message to the third target network function through a service-based interface. The third target network function mentioned in this example may be a network function other than the first network function in the core network system, for example, the second network function.

In this embodiment, all NAS messages on an N1 interface may be directly sent by the access network device (for example, the base station) to the first network function, and the first network function decrypts the NAS messages, and then locally processes decrypted NAS messages or forwards the decrypted NAS messages to the second network function for processing.

Optionally, the first network function mentioned in the foregoing embodiments may be further configured to send a downlink NAS message to the terminal, where the downlink NAS message may be locally generated by the first network function.

Optionally, the second network function mentioned in the foregoing embodiments may be further configured to send fourth target information to the first network function, and the first network function is further configured to send a downlink NAS message including the fourth target information to the terminal. For example, the second network function sends, to the first network function through a service-based interface, plaintext information that needs to be sent to the terminal, and the first network function encrypts the information, and then forwards an encrypted downlink NAS message to the terminal.

In the foregoing embodiments, the first network function (the ACF) may serve as the termination of the NAS protocol, and the first network function may be responsible for ciphering and integrity protection of NAS messages. Therefore, an important function of an interface between the first network function and the second network function is as follows: After decrypting an uplink NAS message, the first network function forwards necessary information to the second network function. The second network function may send, to the first network function, a message that needs to be sent to the terminal, and the first network function encrypts the message, and then forwards an encrypted message to the terminal through the access network device. An interaction process between the first network function and the second network function may be implemented based on a service-based interface.

The foregoing mainly describes main functions of the first network function, the second network function, and the third network function. The following describes interfaces provided by these network functions in several embodiments.

Optionally, an interface function related to NAS protocol transport on an NG application protocol (NG Application Protocol, NGAP) interface in the conventional technology may be inherited by the ACF, and other interface functions on the NGAP interface are separately inherited by the first network function, the second network function, and the third network function.

In an example, the first network function provides at least one of interface functions in the following (1) to (9):
(1) an initial terminal message (Initial UE Message);
(2) downlink NAS transport (Downlink NAS Transport);
(3) uplink NAS transport (Uplink NAS Transport);
(4) a NAS non-delivery indication (NAS Non Delivery Indication);
(5) a reroute NAS request (Reroute NAS Request);
(6) a terminal transport network layer association (Transport Network Layer Association, TNLA) binding procedure (UE TNLA Binding Procedures);
(7) a configuration transfer procedure (Configuration Transfer Procedures);
(8) a warning message transmission procedure (Warning Message Transmission Procedures); and
(9) a radio access network information management (Radio access network Information Management, RIM) information transfer procedure (RIM Information Transfer Procedures).

In the foregoing embodiments, in a case that a RAN does not support an SBA, an N2 interface function between a base station and the AMF in the conventional technology may be inherited by the first network function.

In an example, the second network function provides at least one of interface functions in the following (1) to (7):
(1) a protocol data unit (Protocol Data Unit, PDU) session management procedure (PDU Session Management Procedures);
(2) a terminal mobility management procedure (UE Mobility Management Procedures);
(3) a paging procedure (Paging Procedures);
(4) a new radio positioning protocol A transport procedure (NRPPa Transport Procedures);
(5) a trace procedure (Trace Procedures);
(6) a location reporting procedure (Location Reporting Procedures); and
(7) a data usage reporting procedure (Data Usage Reporting Procedures).

In an example, the third network function provides at least one of interface functions in the following (1) and (2):
(1) a terminal context management procedure (UE Context Management Procedures); and
(2) a terminal radio capability management procedure (UE Radio Capability Management Procedures).

The following describes interface functions between the first network function, the second network function, the third network function, and other network functions. All the network functions mentioned herein may belong to the core network system provided in the embodiments of this application. The interfaces mentioned in the embodiments of this application may be SBA-based service-based interfaces or conventional interfaces.

As shown in FIG. 2, the first network function (namely, the ACF) may be connected to at least one of the following in the core network system: a network slice selection function (Network Slice Selection Function, NSSF); an authentication server function (Authentication Server Function, AUSF); a network slice-specific authentication and authorization function (Network Slice-Specific Authentication and Authorization Function, NSSAAF); and a unified data management (Unified Data Management, UDM).

In this embodiment, an interface function between an NSSF and the AMF, an interface function between an AUSF and the AMF, an interface function between an NSSAAF and the AMF, and an interface function between a UDM and the AMF in the conventional technology may be all inherited by the ACF.

As shown in FIG. 2, the second network function (the MSF) may be connected to at least one of the following in the core network system: a session management function (Session Management Function, SMF); a network exposure function (Network Exposure Function, NEF); a short message service function (Short Message Service Function, SMSF); and a location management function (Location Management Function, LMF).

In this embodiment, an interface function between an SMF and the AMF, an interface function between an NEF and the AMF, an interface function between an SMSF and the AMF, and an interface function between an LMF and the AMF in the conventional technology may be all inherited by the MSF.

As shown in FIG. 2, both the first network function (the ACF) and the second network function (the MSF) are connected to at least one of the following (1) and (2) in the core network system: (1) a policy control function (Policy Control Function, PCF); and (2) a network data analytics function (Network Data Analytics Function, NWDAF).

In this embodiment, an interface function between a PCF and the AMF in the conventional technology is inherited by the ACF and the MSF, and an interface function between an NWDAF and the AMF is inherited by the ACF and the MSF.

Optionally, an interface between a terminal radio capability management function (UE radio Capability Management Function, UCMF) and the AMF in the conventional technology may be inherited by the CMF provided in the embodiments of this application.

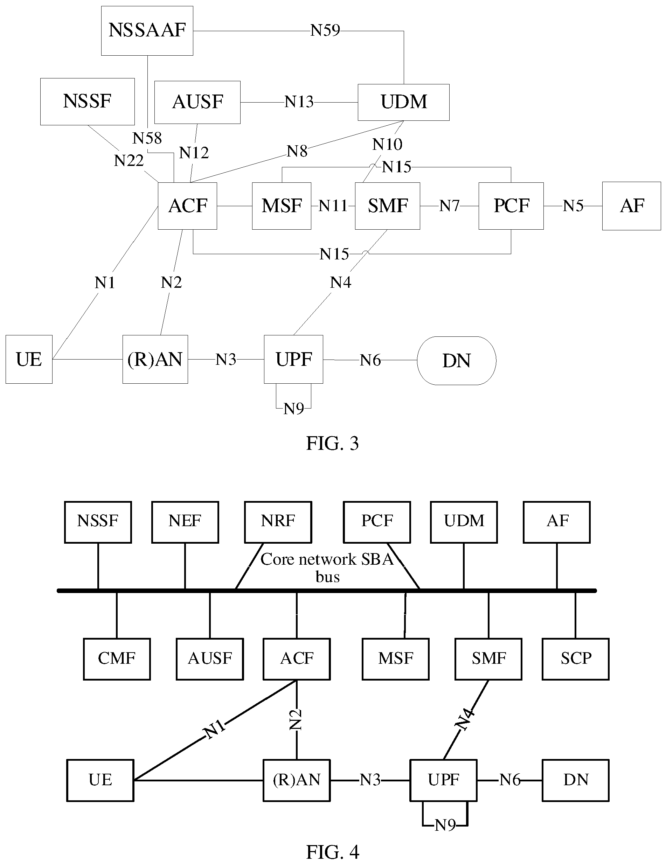

FIG. 3 is an architectural diagram of an interface form of a core network system according to an embodiment of this application. In FIG. 3, an NSSF is connected to an ACF through an N22 interface, an NSSAAF is connected to the ACF through an N58 interface, an AUSF is connected to the ACF through an N12 interface, a UDM is connected to the ACF through an N8 interface, a PCF is connected to the ACF through an N15 interface, UE is connected to the ACF through an N1 interface, a RAN is connected to the ACF through an N2 interface, an SMF is connected to an MSF through an N11 interface, and the PCF is connected to the MSF through an N15 interface.

FIG. 3 further schematically shows connection relationships of other network functions. For example, the UDM is connected to the NSSAAF through an N59 interface, the UDM is connected to the AUSF through an N13 interface, the UDM is connected to the SMF through an N10 interface, the SMF is connected to the PCF through an N7 interface, and the PCF is connected to an application function (Application Function, AF) through an N5 interface.

The RAN is connected to a UPF through an N3 interface, the UPF is connected to a data network (Data Network, DN) through an N6 interface, the UPF is connected to the SMF through an N4 interface, and the UPF further provides an N9 interface.

FIG. 4 is a schematic architectural diagram of a core network system according to an embodiment of this application. The core network system mainly includes an NSSF, an NEF, a network repository function (NF Repository Function, NRF), a PCF, a UDM, an AF, a CMF, an AUSF, an ACF, an MSF, an SMF, and a service communication proxy (Service Communication Proxy, SCP).

FIG. 4 further schematically shows a connection relationship between the core network system and other network functions. For example, UE is connected to the ACF through an N1 interface, the UE is connected to a RAN through an air interface, the RAN is connected to the ACF through an N2 interface, the RAN is connected to a UPF through an N3 interface, the UPF is connected to a DN through an N6 interface, the UPF is connected to the SMF through an N4 interface, and the UPF further provides an N9 interface.

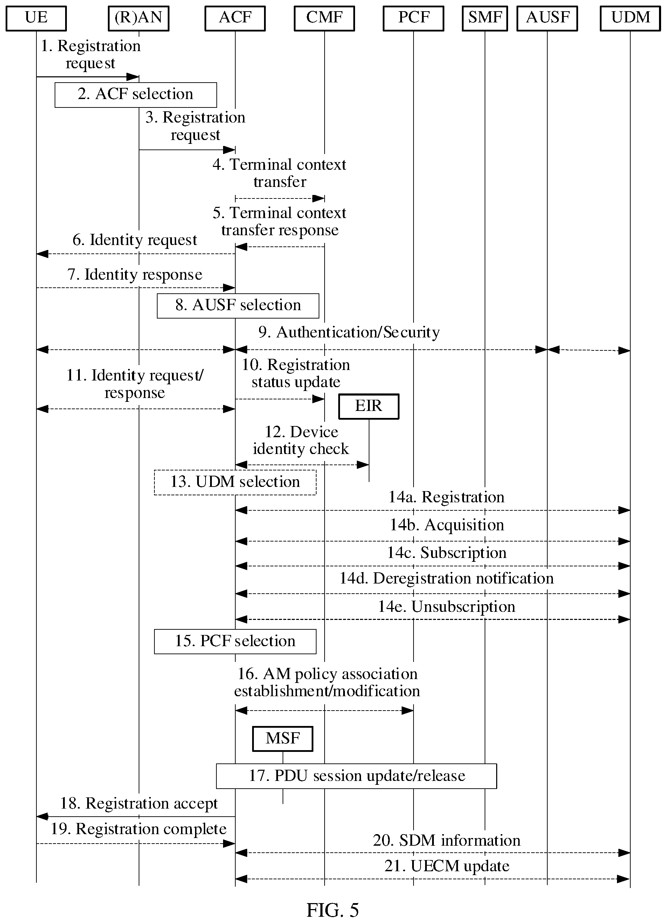

FIG. 5 is a schematic diagram of a mobility management process implemented by a core network system according to an embodiment of this application. The flowchart can also reflect functions implemented by network functions. As shown in FIG. 5, this embodiment includes the following steps:
Step 1: UE sends a registration request (Registration Request) to a RAN.
Step 2: The RAN performs an ACF selection (ACF selection) operation.
Step 3: The RAN sends a registration request (Registration Request) to a selected ACF.
Step 4: The ACF sends a terminal context transfer (Namf_Communication_UEContextTransfer) message to a CMF.
Step 5: The CMF sends a terminal context transfer response (Namf_Communication_UEContextTransfer response) to the ACF.
Step 6: The ACF initiates an identification requester, and sends an identity request message to the UE to request a subscription concealed identifier (Subscription Concealed Identifier, SUCI).
Step 7: The UE returns an identity response message including the SUCI to the ACF.
Step 8: The ACF performs an AUSF selection (AUSF selection) operation.
Step 9: The UE, the ACF, an AUSF, and a UDM perform an authentication/security (Authentication/Security) operation.
Step 10: The ACF sends a registration status update (Namf_Communication_RegistrationStatusUpdate) message to the CMF.
Step 11: The UE and the ACF perform an identity request/response (PEI).
Step 12: The ACF initiates device identity check to an equipment identity register (Equipment Identity Register, EIR) by calling N5g-eir_EquipmentIdentityCheck_Get.
Step 13: The ACF performs a UDM selection (UDM selection) operation.
Step 14a-e: The ACF and a UDM perform the following operations: registration (Nudm_UECM_Registration); acquisition (Nudm_SDM_Get); subscription (Nudm_SDM_Subscribe); deregistration notification (Nudm_UECM_DeregistrationNotify); and unsubscription (Nudm_UECM_Unsubscribe).
Step 15: The ACF performs a PCF selection (PCF selection) operation.
Step 16: The ACF and a PCF perform access management (AM) policy association establishment/modification (AM Policy Association Establishment/Modification).
Step 17: The ACF, an MSF, and an SMF perform a PDU session update/release operation (Nsmf_PDUSession_UpdateSMContext/Nsmf_PDUSession_REEEASESMContext).
Step 18: The ACF sends a registration accept (Registration Accept) to the UE.
Step 19: The UE returns a registration complete (Registration Complete) message to the ACF.
Step 20: Transmit an SDM message (Nudm_SDM_Info) between the ACF and the UDM.
Step 21: Transmit a UE connection management (CM) update message (Nudm_UECM_Update) between the ACF and the UDM.

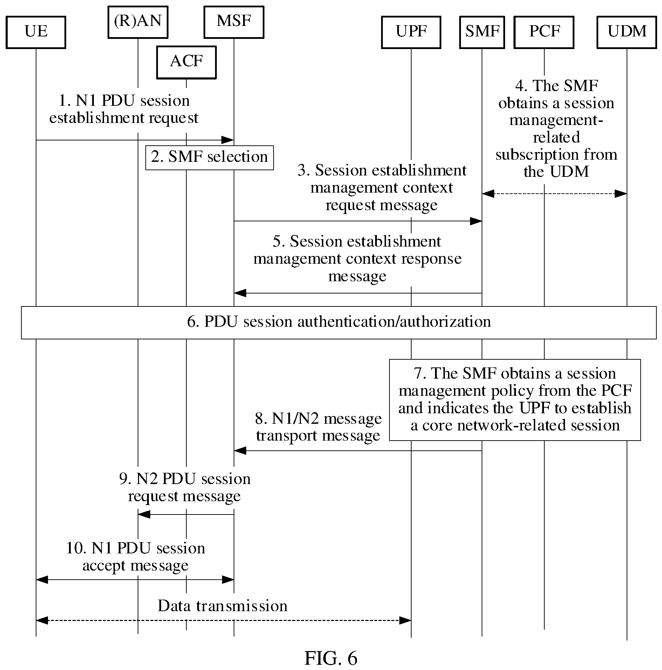

FIG. 6 is a schematic flowchart of a session management process implemented by a core network system according to an embodiment of this application. The flowchart can also reflect functions implemented by network functions. Some processes are omitted in the embodiment shown in FIG. 6. As shown in FIG. 6, this embodiment includes the following steps:
Step 1: UE sends a PDU session establishment request messages to an MSF through an ACF.
Step 2: The MSF performs an SMF selection (SMF selection) operation.
Step 3: The MSF sends a session establishment management context request message to an SMF.
Step 4: The SMF obtains a session management-related subscription from a UDM.
Step 5: The SMF sends a session establishment management context response message to the MSF.
Step 6: Perform PDU session authentication/authorization.
Step 7: The SMF obtains a session management policy from a PCM and indicates the UPF to establish a core network-related session.
Step 8: The SMF sends an N1/N2 message transport message to the MSF.
Step 9: The MSF sends an N2 PDU session request message to a RAN (for example, a base station) through the ACF.
Step 10: The MSF sends an N1 PDU session accept message to the terminal through the ACF.

Subsequently, data may be transmitted between the UE and the UPF.

The foregoing describes the embodiments of this application with reference to the accompanying drawings. However, this application is not limited to the foregoing specific implementations. The foregoing specific implementations are merely illustrative rather than restrictive. As instructed by this application, persons of ordinary skill in the art may develop many other manners without departing from principles of this application and the protection scope of the claims, and all such manners fall within the protection scope of this application.

## Claims

1. A core network system, comprising: a first network function and a second network function, wherein the first network function and the second network function are connected through a core network service-based architecture SBA bus, wherein
the first network function is configured to provide an access control-related service; and
the second network function is configured to provide a mobility management-related service and/or a network service support service.

2. The system according to claim 1, wherein the access control-related service comprises at least one of the following:
receiving a second interface N2 control plane message, and locally processing the N2 control plane message, or sending first target information in the N2 control plane message to a first target network function;
receiving second target information from a second target network function, and sending an N2 control plane message comprising the second target information to an access network device;
sending an N2 control plane message to the access network device;
a ciphering and integrity protection service of a non-access stratum NAS message;
a NAS connection management service;
a registration management service;
a security-related service; and
a non-3rd Generation Partnership Project non-3GPP access support service.

3. The system according to claim 2, wherein the security-related service comprises at least one of the following: an access authentication service; an access authorization service; a security anchor functionality; and a network slice-specific authentication and authorization service.

4. The system according to claim 1, wherein the mobility management-related service and/or the network service support service comprise at least one of the following:
a reachability management service;
a mobility management service;
a terminal mobility event notification service;
a lawful intercept service;
a session management SM service support service;
a short message service SMS support function;
a location service support function;
a cellular Internet of things CIoT service support function; and
an external parameter configuration function.

5. The system according to any one of claims 1 to 4, further comprising a third network function, wherein the third network function is connected to the core network SBA bus, and the third network function is configured to provide a terminal context management service.

6. The system according to claim 5, wherein
the first network function is further configured to receive an uplink NAS message, and locally process the uplink NAS message, or send third target information in the uplink NAS message to a third target network function; and/or
the first network function is further configured to send a downlink NAS message to a terminal.

7. The system according to claim 5, wherein
the second network function is further configured to send fourth target information to the first network function, and the first network function is further configured to send a downlink NAS message comprising the fourth target information to a terminal.

8. The system according to claim 1, wherein the first network function provides at least one of the following interface functions:
an initial terminal message;
downlink NAS transport;
uplink NAS transport;
a NAS non-delivery indication;
a reroute NAS request;
a terminal transport network layer association TNLA binding procedure;
a configuration transfer procedure;
a warning message transmission procedure; and
a radio access network information management RIM information transfer procedure.

9. The system according to claim 1, wherein the second network function provides at least one of the following interface functions:
a protocol data unit PDU session management procedure;
a terminal mobility management procedure;
a paging procedure;
a new radio positioning protocol A transport procedure;
a trace procedure;
a location reporting procedure; and
a data usage reporting procedure.

10. The system according to claim 5, wherein the third network function provides at least one of the following interface functions:
a terminal context management procedure; and
a terminal radio capability management procedure.

11. The system according to claim 1, wherein the first network function is connected to at least one of the following in the core network system: a network slice selection function NSSF; an authentication server function AUSF; a network slice-specific authentication and authorization function NSSAAF; and a unified data management UDM.

12. The system according to claim 1, wherein the second network function is connected to at least one of the following in the core network system: a session management function SMF; a network exposure function NEF; a short message service function SMSF; and a location management function LMF.

13. The system according to claim 11 or 12, wherein both the first network function and the second network function are connected to at least one of the following in the core network system: a policy control function PCF; and a network data analytics function NWDAF.
